(19) Europäisches Patentamt / European Patent Office / Office européen des brevets

(11) **EP 3 578 580 A1**

(12) **EUROPEAN PATENT APPLICATION**
published in accordance with Art. 153(4) EPC

(43) Date of publication:
**11.12.2019 Bulletin 2019/50**

(51) Int Cl.:
*C08F 220/18* [(2006.01)]   *C08L 33/08* [(2006.01)]

(21) Application number: **18748253.4**

(22) Date of filing: **26.01.2018**

(86) International application number:
**PCT/JP2018/002564**

(87) International publication number:
**WO 2018/143101 (09.08.2018 Gazette 2018/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **31.01.2017 PCT/JP2017/016038**

(71) Applicant: **Zeon Corporation**
**Chiyoda-ku**
**Tokyo 100-8246 (JP)**

(72) Inventors:
• **FURUKO, Ayako**
  **Tokyo 100-8246 (JP)**
• **EJIRI, Kazuhiro**
  **Tokyo 100-8246 (JP)**
• **MASUDA, Hirofumi**
  **Tokyo 100-8246 (JP)**

(74) Representative: **Maiwald Patent- und
Rechtsanwaltsgesellschaft mbH
Elisenhof
Elisenstraße 3
80335 München (DE)**

(54) **ACRYLIC RUBBER, ACRYLIC RUBBER COMPOSITION, AND ACRYLIC RUBBER
CROSSLINKED PRODUCT**

(57)    An acrylic rubber includes a (meth)acrylate ester monomeric unit; and a crosslinkable monomeric unit, wherein a complex viscosity at 60 °C denoted as $\eta^*(60\ °C)$ and a complex viscosity at 100 °C denoted as $\eta^*(100\ °C)$ satisfy the following formula (1) and the following formula (2).

$$\eta^*(100\ °C)/\eta^*(60\ °C) < 0.8 \quad (1)$$

$$\eta^*(100\ °C) < 3500 Pa \cdot s \quad (2)$$

EP 3 578 580 A1

**Description**

TECHNICAL FIELD

The present invention relates to acrylic rubbers, acrylic rubber compositions, and crosslinked acrylic rubbers.

BACKGROUND ART

Acrylic rubbers have been widely used as rubber materials for obtaining crosslinked rubbers with excellent heat resistance, oil resistance, and aging resistance, in various sealing materials, hoses, and other functional parts mainly for automotive applications. The demand for acrylic rubbers is expected to increase in the future, and improvement of the productivity of crosslinked acrylic rubbers (or acrylic rubber moldings) has been desired.

A crosslinked acrylic rubber is obtained, for example, by extruding an acrylic rubber composition, to which other components such as a crosslinking agent, a filler, and the like are added, through an extruder and by crosslinking the extruded material. When an acrylic rubber composition is extruded, if the extrudability from the extruder improves (e.g., the discharge quantity increases and the discharge length increases), the productivity of acrylic rubber moldings increases. In order to improve the extrudability, it has been conventionally practiced to adjust the combination of other components and the amount of additives to be compounded in an acrylic rubber.

RELATED ART DOCUMENTS

[Patent Document]

Patent Document 1: Japanese Laid-open Patent Publication No. S59-122508
Patent Document 2: Japanese Laid-open Patent Publication No. S64-14260

SUMMARY OF INVENTION

[PROBLEM TO BE SOLVED BY THE INVENTION]

However, conventional production of acrylic rubber moldings using an extruder, the combination of other components and the amount of additives to be compounded in an acrylic rubber have been restricted depending on the environment and conditions in which the obtained crosslinked acrylic rubber is used. Also, simply adjusting the compound of an acrylic rubber composition has a limit on improving the productivity brought by improved extrusion.

It is an object of the present invention to provide an acrylic rubber that enables to improve the productivity of rubber moldings.

[MEANS FOR SOLVING THE PROBLEM]

In order to solve the problems described above, according to one aspect of the present invention, an acrylic rubber includes a (meth)acrylate ester monomeric unit; and a crosslinkable monomeric unit, wherein a complex viscosity at 60 °C denoted as $\eta^*(60\ °C)$ and a complex viscosity at 100 °C denoted as $\eta^*(100\ °C)$ satisfy the following formula (1) and the following formula (2).

$$\eta^*(100\ °C)/\eta^*(60\ °C) < 0.8 \quad (1)$$

$$\eta^*(100\ °C) < 3500\,Pa \cdot s \quad (2)$$

[ADVANTAGEOUS EFFECT OF THE PRESENT INVENTION]

According to one aspect of the present invention, it is possible to provide an acrylic rubber that enables to improve the productivity of rubber moldings.

EMBODIMENTS FOR CARRYING OUT THE INVENTION

In the following, embodiments of the present invention will be described in detail.

<Acrylic rubber>

An acrylic rubber according to an embodiment of the present invention is an acrylic rubber that includes a (meth)acrylate ester monomeric unit and a crosslinkable monomeric unit, and a complex viscosity at 60 °C denoted as $\eta^*(60\ °C)$ and a complex viscosity at 100 °C denoted as $\eta^*(100\ °C)$ satisfy the following formula (1) and the following formula (2).

$$\eta^*(100\ °C)/\eta^*(60\ °C)<0.8\quad(1)$$

$$\eta^*(100\ °C)<3500Pa\cdot s\qquad(2)$$

The acrylic rubber of the present embodiment is a rubbery polymer that contains (meth)acrylate ester monomeric units in molecules and favorably contains (meth)acrylate ester monomers as the main component. Here, "(meth)acrylate" means both "acrylate" and "methacrylate". Also, "contains as the main component" means containing the component by greater than or equal to 50 wt% in all monomeric units constituting the polymer of the acrylic rubber.

As the (meth)acrylate ester monomer forming (meth)acrylate ester monomeric units contained in the acrylic rubber of the present embodiment, although not limited in particular, a (meth)acrylate alkyl ester monomer and a (meth)acrylate alkoxyalkyl ester monomer may be listed.

As the (meth)acrylate alkyl ester monomer, although not limited in particular, an ester of (meth)acrylic acid and alkanol having 1 to 8 carbon atoms is favorable; specifically, methyl (meth)acrylate, ethyl (meth)acrylate, n-propyl (meth)acrylate, isopropyl (meth)acrylate, n-butyl (meth)acrylate, isobutyl (meth)acrylate, n-hexyl (meth)acrylate, 2-ethylhexyl (meth)acrylate, and cyclohexyl (meth)acrylate may be listed. Among these, ethyl (meth)acrylate and n-butyl (meth)acrylate are favorable, and ethyl acrylate and n-butyl acrylate are particularly favorable. One of these species may be used singly or two or more species may be used together.

As the (meth)acrylate alkoxyalkyl ester monomer, although not limited in particular, an ester of (meth)acrylic acid and alkoxyalkyl alcohol having 2 to 8 carbon atoms is favorable; specifically, methoxymethyl (meth)acrylate, ethoxymethyl (meth)acrylate, 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth)acrylate, and 4-methoxybutyl (meth)acrylate may be listed. Among these, 2-ethoxyethyl (meth)acrylate and 2-methoxyethyl (meth)acrylate are favorable, and 2-ethoxyethyl acrylate and 2-methoxyethyl acrylate are particularly favorable. One of these species may be used singly or two or more species may be used together.

The content of (meth)acrylate ester monomeric units is, with respect to 100 wt% as the total of all monomeric units constituting an acrylic rubber, favorably 50 to 99.5 wt%, more favorably 60 to 99.0 wt%, even more favorably 70 to 99.0 wt%, and furthermore favorably 70 to 99.0 wt%. If the content of (meth)acrylate ester monomeric units is too low, an obtained crosslinked rubber may have reduced heat-resistance and oil-resistance; on the other hand, if too high, an obtained crosslinked rubber may have reduced heat-resistance.

Note that in the present embodiment, it is favorable to have the content of (meth)acrylate ester monomeric units constituted with 30 to 100 wt% of (meth)acrylate alkyl ester monomeric units and 0 to 70 wt% of (meth)acrylate alkoxyalkyl ester monomeric units.

An acrylic rubber according to the present embodiment may optionally include a polyfunctional monomeric unit. This optional polyfunctional monomeric unit is a monomeric unit that has two or more functional groups in a molecule. A functional group here means a group that can be copolymerized with a (meth)acrylate ester monomer. As a polyfunctional monomer forming such a polyfunctional monomeric unit, although not limited in particular, it is possible to use, for example, divinylbenzene, ethylene glycol dimethacrylate, diethylene glycol methacrylate, triethylene glycol dimethacrylate, trimethylolpropane trimethacrylate, tetramethylol methane tetramethacrylate, dipropylene glycol dimethacrylate, polyethylene glycol dimethacrylate, and acrylates of these. Among these, divinylbenzene, ethylene glycol dimethacrylate, and polyethylene glycol dimethacrylate are favorable. Two or more species may be used among these polyfunctional monomers.

The content of polyfunctional monomeric units is, with respect to 100 wt% as the total of all monomeric units constituting an acrylic rubber, favorably less than or equal to 10.0 wt%, more favorably less than or equal to 7.5 wt%, and furthermore favorably 0.01 to 5.0 wt%. Having such polyfunctional monomeric units contained increases branch structures in the acrylic rubber polymer, and thereby, increases the amount of gel in the acrylic rubber polymer and increases the viscosity of the acrylic rubber polymer.

A crosslinkable monomeric unit contained in the acrylic rubber according to the present embodiment is a component unit derived from a crosslinkable monomer that has a crosslinkable group as the side chain. As a crosslinkable group constituting the side chain of such a crosslinkable monomer, although not limited in particular, a crosslinkable group that has one or more species among a carboxyl group, an epoxy group, and a halogen group is favorable. In other words, the crosslinkable monomeric unit is favorably a monomeric unit that has at least one of a carboxyl group, an epoxy group, and a halogen group.

As a crosslinkable monomer forming such a crosslinkable monomeric unit, although not limited in particular, a monomer having a carboxyl group; a monomer having an epoxy group; a monomer having a halogen group (or a halogen atom); a diene monomer; or the like may be listed.

As a monomer having a carboxyl group, although not limited in particular, an $\alpha,\beta$-ethylenically unsaturated carboxylic acid monomer or the like may be listed.

As an $\alpha,\beta$-ethylenically unsaturated carboxylic acid monomer, although not limited in particular, an $\alpha,\beta$-ethylenically unsaturated monocarboxylic acid having 3 to 12 carbon atoms; an $\alpha,\beta$-ethylenically unsaturated dicarboxylic acid having 4 to 12 carbon atoms; a monoester of an $\alpha,\beta$-ethylenically unsaturated dicarboxylic acid having 4 to 12 carbon atoms and an alkanol having 1 to 8 carbon atoms; or the like may be listed. Using an $\alpha,\beta$-ethylenically unsaturated carboxylic acid monomer enables to form an acrylic rubber as a carboxyl-group-containing acrylic rubber having a carboxyl group as a crosslinking point, and thereby, further enables to raise the compression set resistance in the case of being formed as a crosslinked rubber.

As examples of $\alpha,\beta$-ethylenically unsaturated monocarboxylic acid having 3 to 12 carbon atoms, acrylic acid, methacrylic acid, $\alpha$-ethyl acrylic acid, crotonic acid, cinnamic acid, and the like may be listed.

As examples of $\alpha,\beta$-ethylenically unsaturated dicarboxylic acid having 4 to 12 carbon atoms, butanedioic acid such as fumaric acid or maleic acid; itaconic acid; citraconic acid; chloromaleic acid; and the like may be listed.

As examples of monoester of $\alpha,\beta$-ethylenically unsaturated dicarboxylic acid having 4 to 12 carbon atoms and alkanol having 1 to 8 carbon atoms, butanedioic acid mono-chain alkyl ester such as monomethyl fumarate, monoethyl fumarate, mono-n-butyl fumarate, monomethyl maleate, monoethyl maleate, and mono-n-butyl maleate; butanedioic acid monoester having an alicyclic structure such as monocyclopentyl fumarate, monocyclohexyl fumarate, monocyclohexenyl fumarate, monocyclopentyl maleate, monocyclohexyl maleate, and monocyclohexenyl maleate; itaconic acid monoester such as monomethyl itaconate, monoethyl itaconate, mono-n-butyl itaconate, and monocyclohexyl itaconate; and the like may be listed.

Among these, butanedioic acid mono-chain alkyl ester or butenedioic acid monoester having an alicyclic structure is favorable, and mono-n-butyl fumarate, mono-n-butyl maleate, monocyclohexyl fumarate, and monocyclohexyl maleate are more favorable, and mono-n-butyl fumarate is furthermore favorable. One species of these $\alpha,\beta$-ethylenically unsaturated carboxylic acid monomers may be used singly or two or more species may be used together. Among the monomers described above, dicarboxylic acid includes a monomer existing as an anhydride.

As a monomer having an epoxy group, although not limited in particular, an epoxy-group-containing (meth)acrylate ester such as glycidyl (meth)acrylate; epoxy-group-containing ether such as allyl glycidyl ether or vinyl glycidyl ether; or the like may be listed.

As a monomer having a halogen group, although not limited in particular, unsaturated alcohol ester of halogen-containing saturated carboxylic acid, haloalkyl (meth)acrylate ester , haloacyloxyalkyl (meth)acrylate ester, (haloacetylcarbamoyloxy)alkyl (meth)acrylate ester, halogen-containing unsaturated ether, halogen-containing unsaturated ketone, halomethyl-group-containing aromatic vinyl compound, halogen-containing unsaturated amide, haloacetyl-group-containing unsaturated monomer, or the like may be listed.

As specific examples of unsaturated alcohol ester of halogen-containing saturated carboxylic acid, vinyl chloroacetate, vinyl 2-chloropropionate, allyl chloroacetate, and the like may be listed.

As specific examples of haloalkyl (meth)acrylate ester, chloromethyl (meth)acrylate, 1-chloroethyl (meth)acrylate, 2-chloroethyl (meth)acrylate, 1,2-dichloroethyl (meth)acrylate, 2-chloropropyl (meth)acrylate, 3-chloropropyl (meth)acrylate, 2,3-dichloropropyl (meth)acrylate, and the like may be listed.

As specific examples of haloacyloxyalkyl (meth)acrylate ester, 2-(chloroacetoxy)ethyl (meth)acrylate, 2-(chloroacetoxy)propyl (meth)acrylate, 3-(chloroacetoxy)propyl (meth)acrylate, 3-(hydroxychloroacetoxy)propyl (meth)acrylate, and the like may be listed.

As specific examples of (haloacetylcarbamoyloxy)alkyl (meth)acrylate ester, 2-(chloroacetylcarbamoyloxy)ethyl (meth)acrylate, 3-(chloroacetylcarbamoyloxy)propyl (meth)acrylate, and the like may be listed.

As specific examples of halogen-containing unsaturated ether, chloromethyl vinyl ether, 2-chloroethyl vinyl ether, 3-chloropropyl vinyl ether, 2-chloroethyl allyl ether, 3-chloropropyl allyl ether, and the like may be listed.

As specific examples of halogen-containing unsaturated ketone, 2-chloroethylvinyl ketone, 3-chloropropyl vinyl ketone, 2-chloroethyl allyl ketone, and the like may be listed.

As specific examples of halomethyl-containing aromatic vinyl compound, p-chloromethylstyrene, m-chloromethylstyrene, o-chloromethylstyrene, p-chloromethyl-α-methylstyrene, and the like may be listed.

As specific examples of halogen-containing unsaturated amide, N-chloromethyl (meth)acrylamide and the like may be listed.

As specific examples of haloacetyl-group-containing unsaturated monomer, 3-(hydroxychloroacetoxy)propyl-lallyl ether, p-vinylbenzyl chloroacetate, and the like may be listed.

As diene monomers, although not limited in particular, for example, conjugated diene monomers and non-conjugated diene monomers may be listed. Note that if diene monomers contain polyfunctional monomers described above, diene monomers considered here are diene monomers other than monomers of components contained in the polyfunctional monomers.

As specific examples of conjugated diene monomer, 1,3-butadiene, isoprene, piperylene, and the like may be listed.

As specific examples of non-conjugated diene monomer, ethylidene norbornene, dicyclopentadiene, dicyclopentadienyl (meth)acrylate, 2-dicyclopentadienylethyl (meth)acrylate, and the like may be listed.

Among the crosslinkable monomers described above, in the case of using α-β ethylenically unsaturated carboxylic acid monomer, an acrylic rubber can be formed as a carboxyl-group-containing acrylic rubber. Forming the acrylic rubber as a carboxyl-group-containing acrylic rubber enables to make the oil resistance and heat resistance satisfactory, and to improve the compression set resistance.

The content of crosslinkable monomeric units is, with respect to 100 wt% as the total of all monomeric units constituting an acrylic rubber, favorably 0.1 to 10 wt%, and more favorably 0.5 to 6 wt%. Note that if the crosslinkable monomeric units constitute less than 0.1 wt%, crosslinking of the acrylic rubber may not be completed sufficiently and a sufficient mechanical strength may not be obtained. Meanwhile, if exceeding 10 wt%, the acrylic rubber may be excessively crosslinked and the elasticity of a crosslinked rubber may be reduced.

An acrylic rubber according to the present embodiment may contain other copolymerizable monomeric units in addition to the (meth)acrylate monomeric units and crosslinkable monomeric units described above as long as properties of the acrylic rubber are maintained.

As the other copolymerizable monomers, although not limited in particular, for example, aromatic vinyl monomer (other than one that corresponds to a polyfunctional monomer described above if containing the polyfunctional monomer), α,β-ethylenically unsaturated nitrile monomer, olefinic monomer, vinyl ether compound, and the like may be listed.

As specific examples of aromatic vinyl monomer, styrene, α-methylstyrene, and the like may be listed. As specific examples of α,β-ethylenically unsaturated nitrile monomer, acrylonitrile, methacrylonitrile, and the like may be listed. As specific examples of olefinic monomer, ethylene, propylene, 1-butene, 1-octene, and the like may be listed. As specific examples of vinyl ether compound, vinyl acetate, ethyl vinyl ether, n-butyl vinyl ether, and the like may be listed. Among these, styrene, acrylonitrile, methacrylonitrile, ethylene, and vinyl acetate are favorable; and acrylonitrile, methacrylonitrile, and ethylene are more favorable.

One species of the other copolymerizable monomers may be used singly or two or more may be used together. In the present embodiment, the content of units of the other monomers in an acrylic rubber is less than or equal to 80 wt%, favorably less than or equal to 70 wt%, and more favorably less than or equal to 60 wt%.

Also, an acrylic rubber according to the present embodiment satisfies the following formula (1) and the following formula (2) in terms of a complex viscosity at 60 °C denoted as η*(60 °C) and a complex viscosity at 100 °C denoted as η*(100 °C).

$$\eta*(100\ °C)/\eta*(60\ °C)<0.8 \quad (1)$$

$$\eta*(100\ °C)<3500Pa\bullet s \qquad (2)$$

The complex viscosity η* is a dynamic viscoelasticity measured by using a dynamic viscoelasticity measuring device called "rubber process analyzer RPA-2000" (manufactured by Alpha Technologies, LLC), with 473% strain, at 1 Hz, and a temperature variance of 40 to 120 °C. Also, the complex viscosity at 60 °C denoted as η*(60 °C) is a dynamic viscoelasticity measured at 60 °C, and the complex viscosity at 100 °C denoted as η*(100 °C) is a dynamic viscoelasticity measured at 100 °C.

Note that in the present embodiment, although the ratio η*(100 °C/η*(60 °C) of the complex viscosity at 60 °C denoted as η*(60 °C) and the complex viscosity at 100 °C denoted as η*(100 °C) is less than 0.8 as described above, the ratio is favorably less than 0.78, and more favorably less than 0.76. In addition, although the lower limit of η*(100 °C)/η*(60 °C) is not limited in particular, it is favorably greater than or equal to 0.3, more favorably greater than or equal to 0.4, and furthermore favorably greater than or equal to 0.45.

Also, in the present embodiment, although the complex viscosity at 100 °C denoted as $\eta$*(100 °C) is less than 3500 Pa•s as described above, it is favorably less than 3400 Pa•s, and more favorably less than 3300 Pa•s. Also, although the lower limit of $\eta$*(100 °C) is not limited in particular, it is favorably greater than or equal to 2000, more favorably greater than or equal to 2100, and furthermore favorably greater than or equal to 2200.

As results of an intensive investigation, the inventors have found that by using an acrylic rubber that satisfies such conditions, it is possible to increase the discharge quantity of an acrylic rubber composition and to lengthen the discharge length when performing extrusion molding. This enables to improve the productivity of rubber moldings when rubber moldings are manufactured by extrusion molding. Also, by adjusting the viscoelasticity of an acrylic rubber to satisfy the conditions of the above formula (1) and the above formula (2) and by using the adjusted acrylic rubber, the productivity of the rubber moldings can be improved.

It is further favorable for an acrylic rubber according to the present embodiment to be an acrylic rubber whose long-chain branching index LCBindex satisfies the following formula (3).

$$\mathtt{LCBindex>6.0} \qquad (3)$$

The long-chain branching index LCBindex is obtained by measuring LAOS (Large Amplitude Oscillatory Shear) by using the rubber process analyzer RPA-2000 (manufactured by Alpha Technologies, LLC), with 1000% strain, at 1 Hz, and at 100 °C.

Note that in the present embodiment, the long-chain branching index LCBindex is favorably greater than 6.0 as described above, and more favorably greater than 7.0. Also, although the upper limit of the LCBindex is not limited in particular, the LCBindex is favorably less than or equal to 20, more favorably less than or equal to 16, and furthermore favorably less than or equal to 13.

Since an acrylic rubber satisfying such conditions enables to increase the discharge quantity of an acrylic rubber composition and to lengthen the discharge length in extrusion molding, the productivity can be further improved when manufacturing rubber moldings by extrusion molding. Also, from a different perspective, it can be stated that the viscoelasticity of an acrylic rubber is adjusted to satisfy the conditions of the above formula (1), the above formula (2), and the above formula (3), and by using the adjusted acrylic rubber, the productivity of rubber moldings can be further improved.

An acrylic rubber according to the present embodiment is an acrylic rubber that satisfies the following formula (4) in terms of the complex viscosity at 100 °C denoted as $\eta$*(100 °C), and satisfies the following formula (5) in terms of the long-chain branching index LCBindex.

$$\mathtt{\eta*(100\ {}^{\circ}C)<3500Pa{\cdot}s} \qquad (4)$$

$$\mathtt{LCBindex>6.0} \qquad (5)$$

Since an acrylic rubber satisfying such conditions enables to increase the discharge quantity and to lengthen the discharge length of a crosslinked acrylic rubber in extrusion molding, the productivity can be improved when manufacturing rubber moldings by extrusion molding.

Also, the molecular weight of an acrylic rubber according to the present embodiment is 200,000 to 1,000,000 and is favorably 220,000 to 900,000 by the weight-average molecular weight (Mw). Note that the molecular weight here means, in the case where insoluble components are present in the acrylic rubber, a molecular weight of the remaining components after removing the insoluble components.

If the molecular weight of an acrylic rubber is less than 200,000, sufficient viscoelasticity may not be obtained in the vicinity of a die of an extruder, which causes adhesion between rubber compositions in extrusion molding, and/or makes it difficult to retain the hose shape. Meanwhile, if the molecular weight of an acrylic rubber exceeds 1,000,000, the viscoelasticity of the acrylic rubber becomes too high, and the surface skin of a rubber composition becomes rough.

Also, an acrylic rubber according to the present embodiment has less than or equal to 80% of the amount of gel in a rubber polymer, which is favorably 5% to 80%. If the amount of gel exceeds 80%, the viscoelasticity of the acrylic rubber becomes too high, and the elasticity of a crosslinked rubber is expected to be reduced. Also, it is favorable that the amount of gel is as great as possible within a range less than or equal to 70. If the amount of gel becomes less than 5%, the extrudability becomes poor.

Also, an acrylic rubber according to the present embodiment as an acrylic rubber polymer has a Mooney viscosity (ML1+4, at 100 °C) of 5 to 80 favorably, 10 to 70 more favorably, and 15 to 60 furthermore favorably. An acrylic rubber having such a Mooney viscosity enables to obtain an acrylic rubber composition having excellent processability, and to obtain a crosslinked acrylic rubber having excellent mechanical properties.

<Method of manufacturing acrylic rubber>

A method of manufacturing acrylic rubber according to the present embodiment can manufacture an acrylic rubber by copolymerizing (radically polymerizing) (meth)acrylate ester monomers and crosslinkable monomers by using a publicly known method such as emulsion polymerization, suspension polymerization, solution polymerization, or mass polymerization in the presence of a reaction catalyst and a molecular weight modifier. Among these, emulsion polymerization is favorably performed at a low temperature (lower than or equal to 100 °C) and more favorably under normal pressure from the viewpoint of facilitating the manufacturing of the acrylic rubber.

As the (meth)acrylate ester monomers used in the manufacturing method of the present embodiment, acrylic monomers that constitute an acrylic rubber according to the present embodiments described above can be used. One species of these (meth)acrylate ester monomers may be used singly or two or more species may be used together.

In the manufacturing method of the present embodiment, polyfunctional monomers may be optionally used. As optional polyfunctional monomers, the optional polyfunctional monomers described above that constitute an acrylic rubber according to the present embodiments can be used. One species of these polyfunctional monomers may be used singly or two or more species may be used together. Note that when the amount of polyfunctional monomers is increased, branch structures in the rubber polymer increase, the amount of gel increases, and thereby, the Mooney viscosity of the rubber polymer tends to increase.

As crosslinkable monomers used in the manufacturing method of acrylic rubber according to the present embodiment, the crosslinkable monomers described above that constitute an acrylic rubber according to the present embodiments can be used. One species of these crosslinkable monomers may be used singly or two or more species may be used together.

As a polymerization initiator used in the manufacturing method of acrylic rubber according to the present embodiment, a polymerization initiator used in an ordinary method when manufacturing acrylic rubber can be used. For example, it is possible to use an azo compound such as azobisisobutyronitrile; an organic peroxide such as diisopropylbenzene hydroperoxide, cumene hydroperoxide, paramentan hydroperoxide, or orbenzoyl peroxide; an inorganic peroxide such as sodium persulfate, potassium persulfate, hydrogen peroxide, or ammonium persulfate; or the like. One species of these polymerization initiators may be used singly or two or more may be combined to be used. The amount of a polymerization initiator(s) to be used is favorably 0.001 to 1.0 parts by weight with respect to 100 parts by weight of the monomers used for polymerization. Increased use of the polymerization initiator tends to reduce the molecular weight and to reduce the Mooney viscosity of the acrylic rubber polymer.

Also, an organic peroxide and an inorganic peroxide as polymerization initiators are favorably used as redox-based polymerization initiators in combination with a reducing agent. As a reducing agent to be used in combination, although not limited in particular, compound containing reduced-state metal ions such as ferrous sulfate, hexamethylenediamine tetraacetic acid iron sodium, or cuprous naphthenate; ascorbic acid (salt) such as ascorbic acid, sodium ascorbate, or potassium ascorbate; erythorbic acid (salt) such as erythorbic acid, sodium erythorbate, or potassium erythorbate; sugar; sulfinic acid such as sodium hydroxymethanesulfinate; sulfite such as sodium sulfite, potassium sulfite, sodium bisulfite, aldehyde sodium bisulfite, or potassium bisulfite; pyrosulfites such as sodium pyrosulfite, potassium pyrosulfite, sodium metabisulfite, or potassium metabisulfite; thiosulfates such as sodium thiosulfate or potassium thiosulfate; phosphorous acid (salt) such as phosphorous acid, sodium phosphite, potassium phosphite, sodium hydrogen phosphite, or potassium hydrogen phosphite; pyrophosphorous acid (salt) such as pyrophosphorous acid, sodium pyrophosphite, potassium pyrophosphite, sodium hydrogen pyrophosphite, or potassium hydrogen pyrophosphite; sodium formaldehyde sulfoxylate; or the like may be listed. One species of these reducing agents may be used singly or two or more species may be combined to be used. The amount of a reducing agent(s) to be used is favorably 0.0003 to 0.1 parts by weight with respect to 100 parts by weight of the polymerization initiators.

As the molecular weight modifier used in the manufacturing method of acrylic rubber according to the present embodiment, a molecular weight modifier used in an ordinary method when manufacturing acrylic rubber can be used. Note that increased use of the molecular weight modifier tends to reduce the molecular weight and to reduce the Mooney viscosity of the acrylic rubber polymer.

When manufacturing acrylic rubber according to the present embodiment, secondary materials for polymerization such as a particle-size modifier, a chelating agent, an oxygen scavenger, and the like may be used as necessary.

In the method of manufacturing acrylic rubber according to the present embodiment, the reaction temperature and the reaction time may be adjusted appropriately. Normally, these are set to 0 to 100 °C and 0.1 to 50 hours, and favorably set to 5 to 80 °C and 0.5 to 30 hours. Note that if the reaction temperature is raised, the amount of gel increases and the branch structures increase. On the other hand, the molecular weight decreases and the Mooney viscosity tends to decrease. Also, the reaction pressure may be adjusted appropriately depending on the type of acrylic rubber. For example, the polymerization reaction is performed under normal pressure for an acrylate-based acrylic rubber, or performed under high pressure for an ethylene-acrylate-based acrylic rubber. Note that when the reaction pressure is raised, an acrylic rubber for which the polymerization reaction is performed under high pressure, such as an ethylene-acrylate-based acrylic rubber, tends to have a reduced molecular weight of the rubber polymer and increased branch structures, and thereby, a decreased Mooney viscosity.

According to the method of manufacturing acrylic rubber according to the present embodiment, it is possible to manufacture an acrylic rubber that satisfies the conditions of the following formula (1) and the following formula (2) while maintaining the Mooney viscosity representing a physical property of the acrylic rubber, by adjusting the amount of the optional polyfunctional monomers, the amount of catalysts, the amount of molecular weight modifiers, the reaction temperature, and the reaction pressure as described above.

$$\eta*(100\ °C)/\eta*(60\ °C)<0.8 \quad (1)$$

$$\eta*(100\ °C)<3500Pa\cdot s \quad (2)$$

Also, according to the method of manufacturing acrylic rubber according to the present embodiment, it is possible to manufacture an acrylic rubber that satisfies the conditions of the following formula (4) and the following formula (5) while maintaining the Mooney viscosity representing a physical property of the acrylic rubber, by adjusting the amount of the optional polyfunctional monomers, the amount of catalysts, the amount of molecular weight modifiers, the reaction temperature, and reaction pressure as described above.

$$\eta*(100\ °C)<3500Pa\cdot s \quad (4)$$

$$LCBindex>6.0 \quad (5)$$

In other words, by using the manufacturing method of acrylic rubber according to the present embodiment, it is possible to provide an acrylic rubber that enables to improve the productivity in the case of manufacturing rubber moldings by extrusion molding.

<Acrylic rubber composition>

An acrylic rubber composition according to the present embodiment contains an acrylic rubber and a crosslinking agent.

As an acrylic rubber contained in an acrylic rubber composition of the present embodiment, the acrylic rubber described above can be used.

The crosslinking agent used in the present embodiment is not limited as long as being capable of reacting with a structural unit derived from a crosslinkable monomer, which acts as a crosslinking point in an acrylic rubber, to form a crosslinked structure.

As the crosslinking agent, it is possible to use conventional, publicly-known crosslinking agents, which includes, for example, polyamine compound such as diamine compound and its carbonate; polyhydrazide compound; sulfur; sulfur donor; triazinethiol compound; polyvalent epoxy compound; organocarboxylic ammonium salt; dithiocarbamate metal salt; polyvalent carboxylic acid; quaternary onium salt; imidazole compound; isocyanuric acid compound; organic peroxide; and the like. One species of these crosslinking agents may be used singly or two or more species may be used together. It is favorable to select crosslinking agents appropriately in accordance with the type of crosslinkable monomeric unit.

Note that in the case where the crosslinkable monomer constituting the crosslinkable monomeric unit of an acrylic rubber is a crosslinkable monomer containing a carboxyl group, a polyamine compound and a polyhydrazide compound are favorable as the crosslinking agent, and a polyamine compound is more favorable. Also, among polyamine compounds, aliphatic diamine and aromatic diamine are favorable; among aliphatic diamines, hexamethylene diamine carbamate is favorable; and among aromatic diamines, 2,2-bis[4-(4-aminophenoxy)phenyl]propane is favorable.

Also, in the case where the crosslinkable monomer constituting the crosslinkable monomeric unit is a crosslinkable monomer containing an epoxy group, as the crosslinking agent, it is possible to use ammonium benzoate, dithiocarbamate and its derivatives, imidazole, and the like.

Also, in the case where the crosslinkable monomer constituting the crosslinkable monomeric unit is a crosslinkable monomer containing a halogen group, as the crosslinking agent, it is possible to use triazinethiol derivatives such as trithiocyanuric acid, 2,4,6-trimelcapto-s-triazine; organic carboxylic acid salt such as ammonium adipate; a mixture of metal soap and sulfur; and the like.

The content of the crosslinking agent in an acrylic rubber composition of the present embodiment is, with respect to 100 parts by weight of an acrylic rubber in the acrylic rubber composition, favorably 0.05 to 10 parts by weight, more favorably 0.1 to 5 parts by weight, and particularly favorably 0.2 to 5 parts by weight. If the content of the crosslinking agent is too low, it may not be sufficiently crosslinked, and it may become difficult to maintain the shape of a crosslinked acrylic rubber. On the other hand, if the content is too high, a crosslinked acrylic rubber may become too hard, which impairs the elasticity.

An acrylic rubber composition of the present embodiment may contain a crosslinking accelerator in addition to a crosslinking agent. The crosslinking accelerator is not limited in particular as long as being capable of accelerating crosslinking in combination with the crosslinking agent. One species of crosslinking accelerators may be used singly or two or more species may be used together.

The amount of the crosslinking accelerator to be used is, with respect to 100 parts by weight of an acrylic rubber in the acrylic rubber composition, favorably 0.1 to 10 parts by weight, more favorably 0.5 to 7.5 parts by weight, and particularly favorably 1 to 5 parts by weight. An excessive amount of the crosslinking accelerator may result in a too high rate of crosslinking, blooming of the crosslinking accelerator on the surface of a crosslinked material, and/or making a crosslinked material too hard when performing crosslinking. An insufficient amount of the crosslinking accelerator may result in a too low rate of crosslinking and/or a significantly reduced tensile strength of a crosslinked material.

Also, in addition to the components described above, an acrylic rubber composition according to the present embodiment may contain compounding agents commonly used in the field of acrylic rubber, where the compounding agents include a crosslinking activator, a filler, a lubricant, an antiaging agent, an antiscorching agent, a process oil, and a plasticizer, each of which may be compounded by a necessary amount.

The filler is not limited in particular, and a carbon-based material such as carbon black, graphite, or the like can be used. In particular, it is favorable to use carbon black. As specific examples of carbon black, furnace black, acetylene black, thermal black, channel black, and the like may be listed. Among these, it is favorable to use furnace black; as specific examples, SAF, ISAF, ISAF-HS, ISAF-LS, IISAF-HS, HAF, HAF-HS, HAF-LS, MAF, FEF, and the like may be listed, among which FEF, MAF, and HAF-HS are particularly favorable. As specific examples of graphite, natural graphite such as scaly graphite and flake graphite; and artificial graphite may be listed. Note that one species of the carbon-based materials described above may be used singly or two or more may be combined to be used. The amount of filler to be added is favorably 40 to 90 parts by weight with respect to 100 parts by weight of an acrylic rubber in the acrylic rubber composition.

As fillers other than carbon-based materials, for example, metal powders such as aluminum powders; inorganic powders such as hard clay, talc, calcium carbonate, titanium oxide, calcium sulfate, calcium carbonate, aluminum hydroxide; powders of organic powders such as starch and polystyrene powders; short fibers such as glass fibers (milled fibers), carbon fibers, aramid fibers, potassium titanate whiskers; silica; mica; and the like may be listed. One of these fillers may be used singly or two or more may be combined to be used.

As specific examples of lubricants, hydrocarbon waxes such as paraffin wax, microcrystalline wax, polypropylene wax, and montan wax; fatty acid waxes such as stearic acid, hydroxystearic acid, and compound stearic acid, and hydrous oil; fatty acid amide waxes such as stearamide, oxystearamide, oleylamide, elurylamide, lauryl amide, palmitylamide, behenamide, methylolamide, higher fatty acid mono-amide, methylene bis-stearamide, ethylene bis-stearamide, ethylene bis-oleylamide, higher fatty acid bisamide, N-stearyl oleylamide, N-stearyl erucilamide, N-stearyl palmitamide, a complex amide, and a special fatty acid amide; aromatic fatty acid ester such as n-butylstearate, polyhydric alcohol fatty acid ester, saturated fatty acid ester, special fatty acid ester, aromatic fatty acid ester, and a complex ester; fatty alcohol waxes such as higher alcohol, higher alcohol complex, higher alcohol ester, polyalcohol, and polyglycol;

partial ester waxes of polyhydric alcohol and fatty acid such as glycerol fatty acid ester, hydroxystearic triglyceride, and fatty acid partial ester;

silicone oil, polyorganosiloxane, disstearyl epoxy hexoxy hydroxy phthalate, sodium alkyl sulfate, long-chain aliphatic compound, non-ionic ester-based activator, block copolymer of ethylene oxide and propylene oxide, and tetrafluoroethylene resin powder; and the like may be listed. One species of these lubricants may be used singly or two or more species may be combined to be used.

As an antiaging agent, a phenolic, amine, phosphatic, or sulfuric antiaging agent may be used. As representative examples of the phenolic type, 2,2-methylenebis(4-methyl-6-t-butylphenol) and the like may be listed; and as representative examples of the amine type, 4,4-bis($\alpha,\alpha$-dimethylbenzyl)diphenylamine and the like may be listed. One species of these antiaging agents may be used singly or two or more species may be combined to be used.

As an antiscorching agent, although not limited in particular, an organic acid antiscorching agent such as phthalic anhydride, benzoic acid, salicylic acid, or apple acid; a nitroso-compound-based antiscorching agent such as N-nitrosodiphenylamine; a thiophthalimide-based antiscorching agent such as N-(cyclohexylthio)phthalimide; sulfonamide derivative; 2-mercaptobenzimidazole; trichlormeramine; stearylamine; or the like may be listed. One of these antiscorching agents may be used singly or two or more species may be used together.

As a plasticizer, although not limited in particular, it is possible to use a trimellitic acid-based plasticizer, pyromellitic acid-based plasticizer, ether-ester-based plasticizer, polyester-based plasticizers, phthalic acid-based plasticizer, adipic ester-based plasticizer, phosphate ester-based plasticizer, sebacic acid ester-based plasticizer, alkylsulfonic ester compound plasticizer, epoxylated vegetable oil-based plasticizer, or the like. As specific examples, trimellitic acid tri-2-ethylhexyl, trimellitic acid isononyl ester, trimellitic acid mixed straight-chain alkyl ester, dipentaerythritol ester, pyromellitic acid 2-ethylhexyl ester, polyether ester (molecular weight around 300 to 5,000), bis[2-(2-butoxyethoxy)ethyl] adipate, dioctyl adipate, adipic acid-based polyester (molecular weight around 300 to 5,000), dioctyl phthalate, diisononyl phthalate, dibutyl phthalate, tricresyl phosphate, dibutyl sebacate, alkylsulfonic acid phenyl ester, epoxylated soybean oil, diheptanoate, di-2-ethylhexanoate, didecanoate, and the like may be listed. One or more species of these may be used singly or together.

Also, an acrylic rubber composition according to the present embodiment may be compounded with polymers such as a rubber other than an acrylic rubber according to the present embodiment, elastomer, resin, or the like as necessary.

As a rubber other than an acrylic rubber, for example, natural rubber (NR), isoprene rubber (IR), solution-polymerized SBR (solution-polymerized styrene butadiene rubber), emulsion-polymerized SBR (emulsion-polymerized styrene butadiene rubber), low-cis BR (butadiene rubber), high-cis BR (trans-bond content of butadiene being 70 to 95%), styreneisoprene copolymer rubber, butadiene-isoprene copolymer rubber, ethylene propylene diene rubber (EPDM), emulsion-polymerized styrene-acrylonitrile-butadiene copolymer rubber, acrylonitrile-butadiene copolymer rubber, polyisoprene-SBR block copolymer rubber, polystyrene-polybutadiene-polystyrene block copolymer, acrylic rubber, epichlorohydrin rubber, fluorine rubber, silicone rubber, ethylene-propylene rubber, urethane rubber, or the like may be listed.

As an elastomer, for example, olefinic elastomer, styrenic elastomer, polyester-based elastomer, polyamide-based elastomer, polyurethane-based elastomer, polysiloxane-based elastomer, or the like may be listed.

As a resin, for example, olefinic resin, styrenic resin, acrylic resin, polyphenylene ether, polyester, polycarbonate, polyamide, or the like may be listed.

As a method for preparing an acrylic rubber composition of the present embodiment, a mixing method such as roll mixing, Banbury mixing, screw mixing, solution mixing, or the like may be suitably adopted. Although the sequence of compounding is not limited in particular, components that are hard to react or decompose by heat may be mixed sufficiently, and then, components that are susceptible to reaction or decomposition (e.g., crosslinking agents, crosslinking accelerators, etc.) may be mixed in a short period of time at a temperature that does not cause reaction or decomposition.

Since an acrylic rubber composition according to the present embodiment obtained in this way enables to increase the discharge quantity of the acrylic rubber composition and to lengthen the discharge length in extrusion molding, the productivity can be further improved when manufacturing rubber moldings by extrusion molding.

<Crosslinked acrylic rubber>

A crosslinked acrylic rubber according to the present embodiment is formed by crosslinking an acrylic rubber composition described above.

Crosslinking is performed by heating an acrylic rubber composition. Crosslinking conditions include crosslinking temperature being favorably 130 to 220 °C and more favorably 140 to 200 °C; and crosslinking time being favorably 30 seconds to 2 hours and more favorably 1 minute to 1 hour. This first stage of crosslinking may also be referred to as "primary crosslinking".

As a molding method for obtaining a desired shape of a crosslinked acrylic rubber, a conventional, publicly-known molding method may be adopted, which may be extrusion, injection molding, transfer molding, compression molding, or the like. Also, heating and molding may be performed simultaneously for crosslinking.

Typical rubber processing steps may be adopted for extrusion molding. In other words, a rubber composition prepared by roll mixing or the like is fed to the feed opening of an extruder, softened by heat coming from the barrel in the course of being transferred to the head by the screw, and then, passed through a die having a predetermined shape provided in the head, to obtain a long extrusion molding article (plate, bar, pipe, hose, deformed article, etc.) having a desired cross-sectional shape. Manufacturing methods themselves of such extrusion molding articles may simply be based on known manufacturing methods and are not limited in particular, and produced articles may have, for example, fiber coating, thread core, or another rubber or resin adhered.

An extrusion molding article is crosslinked by primary vulcanization in a steam can after having been molded into a predetermined shape. Also, secondary vulcanization may also be performed in hot air in an oven as necessary.

In injection molding, transfer molding, and compression molding, shaping can be performed by filling the mold cavity having the shape of one or several products with an acrylic rubber composition of the present embodiment. In this case, crosslinking may be performed after the molding, or crosslinking may be performed simultaneously with the molding. The molding temperature is normally 10 to 200 °C, favorably 25 to 120 °C. The crosslinking temperature is normally 130 to 220 °C, favorably 150 to 190 °C, and the crosslinking time is normally 2 minutes to 10 hours, favorably 3 minutes to 5 hours. The method of heating may be suitably selected from among methods used for crosslinking a rubber such as press heating, steam heating, oven heating, and hot air heating.

Also, depending on the shape and size of a crosslinked rubber, the crosslinked rubber of the present embodiment may be further heated to be applied with secondary crosslinking. Secondary crosslinking is favorably performed for 1 to 48 hours, which depends on the method of heating, crosslinking temperature, shape, and the like. The heating method and the heating temperature can be selected appropriately.

[Examples]

In the following, examples will be presented to describe the present embodiment in more detail. In the following, parts and percentages are by weight unless otherwise specified. Note that the present embodiment is not limited only to these examples. Characteristics were measured and evaluated as follows.

<Mooney viscosity (ML1+4, 100 °C)>

The Mooney viscosity (ML1+4, 100 °C) of an acrylic rubber polymer was measured at 100 °C according to the Mooney viscosity test of a non-crosslinked rubber physical test method of JIS K6300.

<Molecular weight>

The weight-average molecular weight (Mw) and the number-average molecular weight (Mn) of an acrylic rubber polymer were measured by gel permeation chromatography (GPC). The measurement by GPC was performed by using "HLC-8320" manufactured by Tosoh Corporation as a measuring device; and two units of "TSKgel GMHR-H", which is a separation column manufactured by Tosoh Corporation, are connected in series as columns; under the conditions of the column size set to 7.8 mmID x 30 cm, column temperature set to 40 °C, tetrahydrofuran as eluant, flow rate set to 1.0 mL/min, and injection volume set to 50 $\mu$L. Also, as the detector, a differential refractometer (RI-8320 manufactured by Tosoh Corporation) was used. Note that weight-average molecular weights (Mw) and number-average molecular weights (Mn) were measured as polystyrene equivalent values. At this time, under conditions where the molecular weight standard is set to standard polystyrene and the sample concentration is set to 0.4 mg/mL, a prepared solution was passed through a filter having 0.5 $\mu$m mesh to remove high molecular weight components outside the GPC measurement range.

<Molecular weight distribution>

The molecular weight distribution (Mw/Mn) of an entire acrylic rubber polymer was calculated from the weight-average molecular weight (Mw) and the number-average molecular weight (Mn) described above.

<Amount of gel>

The amount of gel was measured as the amount of THF (tetrahydrofuran) insoluble components. The amount of THF insoluble components was calculated by the following equation where a peak area (mV•sec) was obtained by measuring each acrylic polymer under the GPC conditions described above.

```
      The amount of THF insoluble components =
100 - [(peak area of acrylic polymer)/(peak area of
standard sample) x 100]
```

As the standard sample, an acrylic rubber containing no insoluble component (product name "Nipol AR12"" manufactured by Zeon Corporation, "Nipol" is a registered trademark) was used. A higher value of this amount indicates a higher amount of THF insoluble components constituted with gels and ultra-high molecular weight components.

<Dynamic viscoelasticity>

The viscoelasticity of each acrylic rubber composition was measured as dynamic viscoelasticity under the following conditions.

(1) Complex viscosity $\eta^*$

By using a dynamic viscoelasticity measuring device called "rubber process analyzer RPA-2000" (manufactured by Alpha Technologies, LLC), a temperature variance (40 °C to 120 °C) was measured with 473% strain and at 1 Hz to obtain the complex viscosity $\eta^*$ at each temperature. A higher value indicates a higher viscosity. Here, with respect to the above-described complex viscosity, the complex viscosity at 60 °C was denoted as the complex viscosity $\eta^*$(60 °C), and the complex viscosity at 100 °C was denoted as the complex viscosity $\eta^*$(100 °C), to calculate a value of $\eta^*$ (100 °C)/$\eta^*$(60 °C).

(2) Long-chain branching index LCBindex

By using the rubber process analyzer RPA-2000 (manufactured by Alpha Technologies, LLC), LAOS (Large Amplitude Oscillatory Shear) was measured with 1000% strain, at 1 Hz, and at 100 °C to obtain the LCBindex. A higher value indicates more long chain branches.

<Extrudability>

The extrudability of an acrylic rubber composition was confirmed by using an extruder under the following conditions. The specifications of the used extruder are shown in Table 1.

(1) Discharge quantity

The extruded weight per unit time (g/20 sec) as an acrylic rubber composition of an acrylic rubber was measured as the discharge quantity. A greater value of the discharge quantity indicates a greater extrusion volume and a higher productivity (e.g., more choices become available for dies).

(2) Discharge length

The extrusion length per unit time (cm/20 sec) as an acrylic rubber composition of an acrylic rubber was measured as the discharge length. The measurement was made only when the shape was stable. A greater value of the discharge quantity indicates a higher productivity.

(3) Surface smoothness

Surface smoothness was determined by observing the surface skin of an acrylic rubber composition of an acrylic rubber (as an extrudate). An extrudate having a smooth and glossy skin was evaluated as good with a circular mark; an extrudate having a smooth but non-glossy skin was evaluated as intermediate with a triangular mark; and an extrudate having a rough or wrinkled skin was evaluated as poor with a cross mark.

[Table 1]

| Extruder | 75 mm $\phi$ |
|---|---|
| Die | 33 mm $\phi$ |
| Nipple | 30 mm $\phi$ |
| Clearance | 1.5 mm |
| Revolutions per minute | 45 rpm |
| L/D | 12 |

(continued)

| Temperature [°C] | Head | 80 |
|---|---|---|
| | Cylinder | 60 |
| | Screw | 60 |

<Monomer composition>

The monomer composition of an acrylic rubber was calculated by proton NMR measurement and potentiometry of a polymer acetone solution with a potassium hydroxide aqueous solution.

(1) NMR

A device called "AV500" manufactured by Bruker Corporation and heavy chloroform as the measurement solvent were used. In the case of an acrylate-based acrylic rubber, the composition ratio was calculated by using intensities of protons, which were methyl protons for ethyl acrylate and n-butyl acrylate; $OCH_2+OCH_3$ protons for 2-methoxyethyl acrylate; protons derived from a glycidyl group for glycidyl methacrylate; protons derived from a phenyl group for divinylbenzene; and protons derived from ethylene glycol for ethylene glycol dimethacrylate. In the case of an ethylene-acrylate-based acrylic rubber, the composition ratio was calculated by using intensities of protons, which were protons derived from methyl acrylate, protons carboxylate derived from monoethyl maleate, and protons excluding protons derived from the monomer for ethylene.

(2) Potentiometric titration

The weight fraction of mono-n-butyl fumarate and ethyl hydrogen maleate was determined by potentiometric titration of a polymeric acetone solution and a potassium hydroxide aqueous solution. The monomer composition of an acrylic rubber obtained by using these monomers was calculated based on the NMR measurement results corrected by these measurement results.

<Production examples, Compositions, Examples and Comparative examples>

(Production example 1) Production of acrylate-based acrylic rubber (A)

First, 200 parts of water, 2 parts of sodium lauryl sulfate, and 94.5 parts of ethyl acrylate (EA) were prepared in a polymerization reactor equipped with a thermometer and a stirring device, for which decompression degassing and nitrogen substitution were performed for three times to remove oxygen sufficiently; and then, 1.5 parts of divinylbenzene and 4 parts of glycidyl methacrylate were added to start emulsion polymerization (radical polymerization) at 20 °C under normal pressure; and the reaction was continued for 5 hours so that the polymerization was performed until the polymerization conversion ratio reached approximately 90%. The obtained suspension polymerization solution was coagulated with a calcium chloride solution, washed with water, and dried to obtain an acrylate-based acrylic rubber (A). The obtained acrylate-based acrylic rubber (A) exhibited a polymer composition containing, in monomeric units (may be referred to as monomer units, below), 94.5% of ethyl acrylate, 1.5% of divinylbenzene, and 4.0% of glycidyl methacrylate; a Mooney viscosity of 30.0; a weight-average molecular weight (Mw) of 412,000; a molecular weight distribution (Mw/Mn) of 3.22; and an amount of gel (%) of 42%. These results are presented in Table 2.

(Production example 2) Production of acrylate-based acrylic rubber (B)

Here, 28 parts of ethyl acrylate instead of 94.5 parts of ethyl acrylate, 40.8 parts of n-butyl (BA) acrylate, and 28.7 parts of 2-methoxyethyl acrylate (MEA) were used; 0.5 parts of ethylene glycol dimethacrylate was used instead of 1.5 parts of divinylbenzene; and the added amount of glycidyl methacrylate was changed to 2 parts. Other than these, an acrylate-based acrylic rubber (B) was obtained in substantially the same way as in Production example 1. The obtained acrylate-based acrylic rubber (B) exhibited a polymer composition containing, in monomer units, 28.0% ethyl acrylate, 40.8% n-butyl acrylate, 28.7% 2-methoxyethyl acrylate, 0.5% ethylene glycol dimethacrylate, and 2.0% glycidyl methacrylate; a Mooney viscosity of 33.5; a weight-average molecular weight (Mw) of 813,000; a molecular weight distribution (Mw/Mn) of 2.82; and an amount of gel of 29%. These results are presented in Table 2.

(Production example 3) Production of acrylate-based acrylic rubber (C)

Here, 64 parts of ethyl acrylate instead of 94.5 parts of ethyl acrylate, 32.9 parts of n-butyl (BA) acrylate were used; 1.1 parts of divinylbenzene were used instead of 1.5 parts of divinylbenzene; and 2 parts of allyl glycidyl ether were used instead of glycidyl methacrylate. Other than these, an acrylate-based acrylic rubber (C) was obtained in substantially the same way as in Production example 1. The obtained acrylate-based acrylic rubber (C) exhibited a polymer composition containing, in monomer units, 64.0% ethyl acrylate, 32.9% n-butyl acrylate, 1.1% divinylbenzene, and 2.0% allyl glycidyl ether; a Mooney viscosity of 29.0; a weight-average molecular weight (Mw) of 600,000; a molecular weight distribution (Mw/Mn) of 3.00; and an amount of gel of 52%. These results are presented in Table 2.

(Production example 4) Production of acrylate-based acrylic rubber (D)

Here, 64 parts of ethyl acrylate instead of 94.5 parts of ethyl acrylate and 33.7 parts of n-butyl acrylate were used; 1.1 parts of divinylbenzene was used instead of 1.5 parts of divinylbenzene; and 1.2 parts of mono-n-butyl fumarate was used instead of glycidyl methacrylate. Other than these, an acrylate-based acrylic rubber (D) was obtained in substantially the same way as in Production example 1. The obtained acrylate-based acrylic rubber (D) exhibited a polymer composition containing, in monomer units, 64.0% ethyl acrylate, 33.7% n-butyl acrylate, 1.1% divinylbenzene, and 1.2% mono-n-butyl fumarate; a Mooney viscosity of 32.0; a weight-average molecular weight (Mw) of 810,000; a molecular weight distribution (Mw/Mn) of 2.99; and an amount of gel of 37%. These results are presented in Table 2.

(Production example 5) Production of acrylate-based acrylic rubber (E)

Here, 64 parts of ethyl acrylate instead of 94.5 parts of ethyl acrylate, 23.7 parts of n-butyl acrylate, and 10 parts of 2-methoxyethyl acrylate were used; 1.1 parts of divinylbenzene were used instead of 1.5 parts of divinylbenzene; and 1.2 parts of mono-n-butyl fumarate was used instead of glycidyl methacrylate. Other than these, an acrylate-based acrylic rubber (E) was obtained in substantially the same way as in Production example 1. The obtained acrylate-based acrylic rubber (E) exhibited a polymer composition containing, in monomer units, 64.0% ethyl acrylate, 23.7% n-butyl acrylate, 10.0% 2-methoxyethyl acrylate, 1.1% divinylbenzene, and 1.2% mono-n-butyl fumarate; a Mooney viscosity of 39.0; a weight-average molecular weight (Mw) of 697,000; a molecular weight distribution (Mw/Mn) of 2.78; and an amount of gel of 60%. These results are presented in Table 2.

(Production example 6) Production of acrylate-based acrylic rubber (F)

Here, 54 parts of ethyl acrylate instead of 94.5 parts of ethyl acrylate, 33.7 parts of n-butyl acrylate, and 10 parts of methyl methacrylate (MMA) were used; 1.1 parts of divinylbenzene was used instead of 1.5 parts of divinylbenzene; and 1.2 parts of mono-n-butyl fumarate was used instead of glycidyl methacrylate. Other than these, an acrylate-based acrylic rubber (F) was obtained in substantially the same way as in Production example 1. The obtained acrylate-based acrylic rubber (F) exhibited a polymer composition containing, in monomer units, 54.0% ethyl acrylate, 33.7% n-butyl acrylate, 10.0% methyl methacrylate, 1.1% divinylbenzene, and 1.2% mono n-butyl fumarate; a Mooney viscosity of 43.0; a weight-average molecular weight (Mw) of 376,000; a molecular weight distribution (Mw/Mn) of 3.22; and an amount of gel of 80%. These results are presented in Table 2.

(Production example 7) Production of acrylate-based acrylic rubber (G)

Here, 63.9 parts of ethyl acrylate instead of 94.5 parts of ethyl acrylate, 32.9 parts of n-butyl acrylate, 1.1 parts of divinylbenzene instead of 1.5 parts of divinylbenzene were used; and 2.1 parts of vinyl acetate were used instead of glycidyl methacrylate, except that 2.1 parts of vinyl acetate were used instead of glycidyl methacrylate. Other than these, an acrylate-based acrylic rubber (G) was obtained in substantially the same way as in Production example 1. The obtained acrylate-based acrylic rubber (G) exhibited a polymer composition containing, in monomer units, 63.9% ethyl acrylate, 32.9% n-butyl acrylate, 1.1% divinylbenzene, and 2.1% vinyl chloroacetate in monomers with a Mooney viscosity of 35.0; a weight-average molecular weight (Mw) of 800,000; a molecular weight distribution (Mw/Mn) of 3.02; and an amount of gel of 50%. These results are presented in Table 2.

(Production example 8) Production of acrylate-based acrylic rubber (H)

Here, 63.5 parts of ethyl acrylate instead of 94.5 parts of ethyl acrylate and 34.5 parts of n-butyl acrylate were used; 0.5 parts of ethylene glycol dimethacrylate was used instead of 1.5 parts of divinylbenzene; and 1.5 parts of mono n-butyl fumarate was used instead of 4 parts of glycidyl methacrylate, except that 1.5 parts of mono n-butyl fumarate was used instead of 4 parts of glycidyl methacrylate. Other than these, an acrylate-based acrylic rubber (H) was obtained in substantially the same way as in Production example 1. The obtained acrylate-based acrylic rubber (H) exhibited a polymer composition containing, in monomer units, 63.5% ethyl acrylate, 34.5% n-butyl acrylate, 0.5% ethylene glycol dimethacrylate, and 1.5% n-butyl fumarate in monomers with a Mooney viscosity of 40; a weight-average molecular weight (Mw) of 873,000; a molecular weight distribution (Mw/Mn) of 3.50; and an amount of gel of 21%. These results are presented in Table 2.

(Production example 9) Production of acrylate-based acrylic rubber (I)

The added amount of ethyl acrylate was 98 parts; 0.5 parts of ethylene glycol dimethacrylate was used instead of 1.5 parts of divinylbenzene; and the added amount of glycidyl methacrylate was 1.5 parts. Other than these, an acrylate-based acrylic rubber (I) was obtained in substantially the same way as in Production example 1. The obtained acrylate-based acrylic rubber (I) exhibited a polymer composition containing, in monomer units, 98.0% ethyl acrylate, 0.5% ethylene glycol dimethacrylate, and 1.5% glycidyl methacrylate; a Mooney viscosity of 55.0; a weight-average molecular weight (Mw) of 838,000; a molecular weight distribution (Mw/Mn) of 2.53; and an amount of gel of 8%. These results are presented in Table 2.

(Production example 10) Production of acrylate-based acrylic rubber (J)

The added amount of ethyl acrylate was 97.9 parts; 1.5 parts of divinylbenzene was not used; and 2.1 parts of vinyl chloroacetate was used instead of 4 parts of glycidyl methacrylate. Other than these, an acrylate-based acrylic rubber (J) was obtained in substantially the same way as in Production example 1. The obtained acrylate-based acrylic rubber (J) exhibited a polymer composition containing, in monomer units, 97.9% ethyl acrylate and 2.1% vinyl chloroacetate; a Mooney viscosity of 55.0; a weight-average molecular weight (Mw) of 1, 500,000; a molecular weight distribution (Mw/Mn) of 2.04; and an amount of gel of 23%. These results are presented in Table 2.

(Production example 11) Production of acrylate-based acrylic rubber (K)

The added amount of ethyl acrylate was 97.4 parts; 1.5 parts of divinylbenzene was not used; and 2.6 parts of vinyl chloroacetate was used instead of 4 parts of glycidyl methacrylate. Other than these, an acrylate-based acrylic rubber (K) was obtained in substantially the same way as in Production example 1. The obtained acrylate-based acrylic rubber (K) exhibited a polymer composition containing, in monomer units, 97.4% ethyl acrylate and 2.6% vinyl chloroacetate; a Mooney viscosity of 50.0; a weight-average molecular weight (Mw) of 922,000; a molecular weight distribution (Mw/Mn) of 4.10; and an amount of gel of 33%. These results are presented in Table 2.

(Production example 12) Production of ethylene-acrylate-based acrylic rubber (A)

Polymerization was performed according to a polymerization method of Example 1 in Japanese Laid-open Patent Publication No. S55-5527. The obtained ethylene-acrylate acrylic rubber (A) exhibited a polymer composition containing, in monomer units, 55.0% of methyl acrylate (MeAc), 39.0% of ethylene, and 6.0% of monoethyl maleate; a Mooney viscosity of 16.5; a weight-average molecular weight (Mw) of 241,000; a molecular weight distribution (Mw/Mn) of 4.25; and an amount of gel of 0%. The monomer composition was determined by proton NMR measurement. These results are presented in Table 2.

(Production example 13) Production of ethylene-acrylate-based acrylic rubber (B)

Polymerization was performed according to a polymerization method of Example 1 in Japanese Laid-open Patent Publication No. S55-5527. The obtained ethylene-acrylate acrylic rubber (B) exhibited a polymer composition containing, in monomer units, 55.4% of methyl acrylate, 41.0% of ethylene, and 3.6% of monoethyl maleate; a Mooney viscosity of 29.0; a weight-average molecular weight (Mw) of 235,000; a molecular weight distribution (Mw/Mn) of 2.85; and an amount of gel of 2%. The monomer composition was determined by proton NMR measurement. These results are presented in Table 2.

[Table 2]

| Production ex. | Acrylic rubber | Polymerization method | Composition of polymer (wt%) | | | | | | | | Mooney viscosity | Mw | Mw/Mn | Gel mass (%) |
|---|---|---|---|---|---|---|---|---|---|---|---|---|---|---|
| | | | MeAc | EA | BA | MEA | Ethylene | Others Monomers | Multifunctional monomer | Cross-linkable monomer | | | | |
| Production ex. 1 | Acrylate-based acrylic rubber (A) | Emulsifica -tion/ Radical | | 94.5 | | | | | 1.5 (Divinyl-benzene) | 4.0 (Glycidyl methacrylate) | 30 | 412,000 | 3.22 | 42 |
| Production ex.2 | Acrylate-based acrylic rubber (B) | Emulsifica -tion/ Radical | | 28 | 40.8 | 28.7 | | | 0.5 (Ethylene glycol dimethacrylate) | 2.0 (Glycidyl methacrylate) | 33.5 | 813,000 | 2.82 | 29 |
| Production ex. 3 | Acrylate-based acrylic rubber (C) | Emulsifica -tion/ Radical | | 64 | 32.9 | | | | 1.1 (Divinyl-benzene) | 2,0 (Allyl glycidyl ether) | 29 | 600,000 | 3.00 | 52 |
| Production ex.4 | Acrylate-based acrylic rubber (D) | Emulsifica -tion/ Radical | | 64 | 33.7 | | | | 1.1 (Divinyl-benzene) | 1.2 (Mono-n-butyl fumarate) | 32 | 810,000 | 2.99 | 37 |
| Production ex. 5 | Acrylate-based acrylic rubber (E) | Emulsifica -tion/ Radical | | 64 | 23.7 | 10 | | | 1.1 (Divinyl-benzene) | 1.2 (Mono-n-butyl fumarate) | 39 | 697,000 | 2.78 | 60 |
| Production ex. 6 | Acrylate-based acrylic rubber (F) | Emulsifica -tion/ Radical | | 54 | 33.7 | | | 10(MMA) | 1.1(Divinyl-benzene) | 1.2 (Mono-n-butyl fumarate) | 43 | 376,000 | 3.22 | 80 |
| Production ex. 7 | Acrylate-based acrylic rubber (G) | Emulsifica -tion/ Radical | | 63.9 | 32.9 | | | | 1.1 (Divinyl-benzene) | 2.1 (Vinyl chloroacetate) | 35 | 800,000 | 3.02 | 50 |

(continued)

| Production ex. | Acrylic rubber | Polymerization method | Composition of polymer (wt%) | | | | | | | | Mooney viscosity | Mw | Mw/Mn | Gel mass (%) |
| --- | --- | --- | --- | --- | --- | --- | --- | --- | --- | --- | --- | --- | --- | --- |
| | | | MeAc | EA | BA | MEA | Ethylene | Others Monomers | Multifunctional monomer | Cross-linkable monomer | | | | |
| Production ex. 8 | Acrylate-based acrylic rubber (H) | Emulsifica-tion/ Radical | | 63.5 | 34.5 | | | | 0.5 (Ethylene glycol dimethacrylate) | 1.5 (Mono-n-butyl fumarate) | 40 | 873,000 | 3.50 | 21 |
| Production ex. 9 | Acrylate-based acrylic rubber (I) | Emulsifica-tion/ Radical | | 98 | | | | | 0.5 (Ethylene glycol dimethacrylate) | 1.5 (Glycidyl methacrylate) | 55 | 838,000 | 2.53 | 8 |
| Production ex. 10 | Acrylate-based acrylic rubber (J) | Emulsifica-tion/ Radical | | 97.9 | | | | | None | 2.1 (Vinyl chloroacetate) | 55 | 1,500,000 | 2.04 | 23 |
| Production ex. 11 | Acrylate-based acrylic rubber (K) | Emulsifica-tion/ Radical | | 97.4 | | | | | None | 2.6 (Vinyl chloroacetate) | 50 | 922,000 | 4.10 | 33 |
| Production ex. 12 | Ethylene-acrylate-based acrylic rubber (A) | Solution/ Radical | 55 | | | | 39 | | None | 6.0 (Monoethyl maleate) | 16.5 | 241,000 | 4.25 | 0 |
| Production ex. 13 | Ethylene-acrylate-based acrylic rubber (B) | Solution/ Radical | 55.4 | | | | 41 | | None | 3.6 (Monoethyl maleate) | 29 | 235,000 | 2.85 | 2 |

(Compound 1-1)

By using a Banbury mixer, to 100 parts of an acrylic rubber, 55 parts of FEF carbon black (product name "Seast SO", a filler manufactured by Tokai Carbon Co., Ltd., "Seast" is a registered trademark); 1.5 parts of a plasticizer (product name "Adecasizer RS735" manufactured by ADEKA Corporation, "Adecasizer" is a registered trademark); 2 parts of stearic acid; 1 part of ester-based wax (product name "Greg G-8205", a lubricant manufactured by DIC Corporation); and 2 parts of 4,4'-bis($\alpha,\alpha$-dimethylbenzyl)diphenylamine (product name "Nocrack CD", an antiaging agent manufactured by Ouchi Shinko Chemical Industrial Co., LTD., "Nocrack" is a registered trademark) were added and mixed at 50 °C for 5 minutes. Next, the obtained mixture was transferred to a roll at 50 °C, to which 2,2-bis[4-(4-aminophenoxy)phenyl] propane (product name "BAPP", a crosslinking agent manufactured by SEIKA Corporation) as a crosslinking agent; 1,8-diazabicyclo[5,4,0]undecene-7-ene (DBU) (product name "RHENOGRAN XLA-60" manufactured by RheinChemie Corporation, "RHENOGRAN" is a registered trademark) as a crosslinking accelerator; and 2 parts of 60% DBU (including a portion formed as zinc dialkyl diphosphate salt) were mixed and kneaded to obtain an acrylic rubber composition. This example compound is shown in Table 3.

(Compound 1-2)

The crosslinking agent was changed to 1.5 parts of ammonium benzoate (product name "Varnock AB" manufactured by Ouchi Shinko Chemical Industrial Co., LTD., "Varnock" is a registered trademark); and no crosslinking accelerator was used. Other than these, the materials were compounded, mixed, and kneaded in substantially the same way as with Compound 1-1, to obtain an acrylic rubber composition. This example compound is shown in Table 3.

(Compound 1-3)

The crosslinking agent was changed to 3 parts of semi-hardened sodium soap of beef tallow fatty acid (product name "NS soap" manufactured by Kao Corporation), 0.5 parts of stearic acid (extremely hardened beef tallow) potassium (product name "Nonsoul SK-1" manufactured by NOF Corporation, "Nonsoul" is a registered trademark); and the crosslinking accelerator was changed to 0.3 parts of dispersible sulfur (product name "Sulfax PMC" manufactured by Tsurumi Chemical Industry Co., Ltd., "Sulfax" is a registered trademark). Other than these, the materials were compounded, mixed, and kneaded in substantially the same way as with Compound 1-1, to obtain an acrylic rubber composition. This example compound is shown in Table 3.

(Compound 2-1)

80 parts of MAF carbon black (product name "Seast 116", a filler manufactured by Tokai Carbon Co., Ltd.) was used instead of 55 parts of FEF carbon black; and the added amount of the plasticizer (product name "Adecasizer RS735" manufactured by ADEKA Corporation) was changed to 10 parts. Other than these, the materials were compounded, mixed, and kneaded in substantially the same way as with Compound 1-1, to obtain an acrylic rubber composition. This example compound is shown in Table 3.

(Compound 2-2)

The crosslinking agent was changed to 1.5 parts of ammonium benzoate (product name "Varnock AB" manufactured by Ouchi Shinko Chemical Industrial Co., LTD); and no crosslinking accelerator was used. Other than these, the materials were compounded, mixed, and kneaded in substantially the same way as with Compound 2-1, to obtain an acrylic rubber composition. This example compound is shown in Table 3.

(Compound 2-3)

The crosslinking agent was changed to 3 parts of semi-hardened sodium soap of beef tallow fatty acid (product name "NS soap" manufactured by Kao Corporation), 0.5 parts of stearic acid (extremely hardened beef tallow) potassium (product name "Nonsoul SK-1" manufactured by NOF Corporation); and the crosslinking accelerator was changed to 0.3 parts of dispersible sulfur (product name "Sulfax PMC" manufactured by Tsurumi Chemical Industry Co., Ltd.). Other than these, the materials were compounded, mixed, and kneaded in substantially the same way as with Compound 2-1, to obtain an acrylic rubber composition. This example compound is shown in Table 3.

[Table 3]

| | Compound 1-1 | Compound 1-2 | Compound 1-3 | Compound 2-1 | Compound 2-2 | Compound 2-3 |
|---|---|---|---|---|---|---|
| | [Parts] | [Parts] | [Parts] | [Parts] | [Parts] | [Parts] |
| Acrylic rubber | 100 | 100 | 100 | 100 | 100 | 100 |
| Seast SO | 55 | 55 | 55 | | | |
| Seast 116 | | | | 80 | 80 | 80 |
| RS735 | 1.5 | 1.5 | 1.5 | 10 | 10 | 10 |
| Stearic acid | 2 | 2 | 2 | 2 | 2 | 2 |
| Greg G-8205 | 1 | 1 | 1 | 1 | 1 | 1 |
| Nocrack CD | 2 | 2 | 2 | 2 | 2 | 2 |
| BAPP | 1 | | | 1 | | |
| XLA-60 | 2 | | | 2 | | |
| Vulnoc AB | | 1.5 | | | 1.5 | |
| NS Soap | | | 3 | | | 3 |
| Nonsoul SK-1 | | | 0.5 | | | 0.5 |
| Sulfax PMC | | | 0.3 | | | 0.3 |

(Example 1)

The dynamic viscoelasticity described above was measured for the acrylate-based acrylic rubber (A) obtained in Production example 1. Also the extrudability described above was measured for acrylic rubber compositions in which the acrylate-based acrylic rubber (A) is compounded as the acrylic rubber under the conditions of Compound 1-2 and Compound 2-2, respectively, by performing extrusion molding by the extruder described above. The results are shown in Table 4.

(Example 2)

The dynamic viscoelasticity described above was measured for the acrylate-based acrylic rubber (B) obtained in Production example 2. Also, the extrudability described above was measured for an acrylic rubber composition in which the acrylate-based acrylic rubber (B) is compounded as the acrylic rubber under the conditions of Compound 1-2, by performing extrusion molding by the extruder described above. The results are shown in Table 4.

(Example 3)

The dynamic viscoelasticity described above was measured for the acrylate-based acrylic rubber (C) obtained in Production example 3. Also, the extrudability described above was measured for an acrylic rubber composition in which the acrylate-based acrylic rubber (C) is compounded as the acrylic rubber under the conditions of Compound 1-2, by performing extrusion molding by the extruder described above. The results are shown in Table 4.

(Example 4)

The dynamic viscoelasticity described above was measured for the acrylate-based acrylic rubber (D) obtained in Production example 4. Also, the extrudability described above was measured for acrylic rubber compositions in which the acrylate-based acrylic rubber (D) is compounded as the acrylic rubber under the conditions of Compound 1-1 and Compound 2-1, respectively, by performing extrusion molding by the extruder described above. The results are shown in Table 4.

(Example 5)

The dynamic viscoelasticity described above was measured for the acrylate-based acrylic rubber (E) obtained in Production example 5. Also, the extrudability described above was measured for an acrylic rubber composition in which the acrylate-based acrylic rubber (E) is compounded as the acrylic rubber under the conditions of Compound 1-1, by performing extrusion molding by the extruder described above. The results are shown in Table 5.

(Example 6)

The dynamic viscoelasticity described above was measured for the acrylate-based acrylic rubber (F) obtained in Production example 6. Also, the extrudability described above was measured for an acrylic rubber composition in which the acrylate-based acrylic rubber (F) is compounded as the acrylic rubber under the conditions of Compound 1-1, by performing extrusion molding by the extruder described above. The results are shown in Table 5.

(Example 7)

The dynamic viscoelasticity described above was measured for the acrylate-based acrylic rubber (G) obtained in Production example 7. Also, the extrudability described above was measured for acrylic rubber compositions in which the acrylate-based acrylic rubber (G) is compounded as the acrylic rubber under the conditions of Compound 1-3 and Compound 2-3, respectively, by performing extrusion molding by the extruder described above. The results are shown in Table 5.

(Example 8)

The dynamic viscoelasticity described above was measured for ethylene-acrylate-based acrylic rubber (A) obtained in Production example 12. Also, the extrudability described above was measured for an acrylic rubber composition in which the acrylate-based acrylic rubber (A) is compounded as the acrylic rubber under the conditions of Compound 1-1, by performing extrusion molding by the extruder described above. The results are shown in Table 5.

(Comparative example 1)

The dynamic viscoelasticity described above was measured for the acrylate-based acrylic rubber (H) obtained in Production example 8. Also, the extrudability described above was measured for an acrylic rubber composition in which the acrylate-based acrylic rubber (H) is compounded as the acrylic rubber under the conditions of Compound 1-1, by performing extrusion molding by the extruder described above. The results are shown in Table 6.

(Comparative example 2)

The dynamic viscoelasticity described above was measured for the acrylate-based acrylic rubber (I) obtained in Production example 9. Also, the extrudability described above was measured for acrylic rubber compositions in which the acrylate-based acrylic rubber (I) is compounded as the acrylic rubber under the conditions of Compound 1-2 and Compound 2-2, respectively, by performing extrusion molding by the extruder described above. The results are shown in Table 6.

(Comparative example 3)

The dynamic viscoelasticity described above was measured for the acrylate-based acrylic rubber (J) obtained in Production example 10. Also, the extrudability described above was measured for an acrylic rubber composition in which the acrylate-based acrylic rubber (J) is compounded as the acrylic rubber under the conditions of Compound 1-3, by performing extrusion molding by the extruder described above. The results are shown in Table 6.

(Comparative example 4)

The dynamic viscoelasticity described above was measured for ethylene-acrylate-based acrylic rubber (B) obtained in Production example 13. Also, the extrudability described above was measured for acrylic rubber compositions in which the acrylate-based acrylic rubber (B) is compounded as the acrylic rubber under the conditions of Compound 1-1 and Compound 2-1, respectively, by performing extrusion molding by the extruder described above. The results are shown in Table 6.

(Comparative example 5)

The dynamic viscoelasticity described above was measured for the acrylate-based acrylic rubber (K) obtained in Production example 11. Also, the extrudability described above was measured for an acrylic rubber composition in which the acrylate-based acrylic rubber (K) is compounded as the acrylic rubber under the conditions of Compound 1-3, by performing extrusion molding by the extruder described above. The results are shown in Table 6.

[Table 4]

| | | Ex. 1 | Ex. 2 | Ex. 3 | Ex.4 |
|---|---|---|---|---|---|
| | | Acrylate-based acrylic rubber (A) | Acrylate-based acrylic rubber (B) | Acrylate-based acrylic rubber (C) | Acrylate-based acrylic rubber (D) |
| Viscoelasticity (polymer) | $\eta*(100°C)/\eta*(60°C)$ | 0.60 | 0.70 | 0.62 | 0.70 |
| | $\eta*(100°C)$ (Pa.s) | 2800 | 2600 | 2310 | 2700 |
| | LCB index | 7.6 | 11.1 | 8.5 | 8.1 |
| Compound 1-1 | Discharge quantity (g/20 s) | | | | 1230 |
| | Discharge length (cm/20 s) | | | | 200 |
| | Surface smoothness | | | | ○ |
| Compound 1-2 | Discharge quantity (g/20 s) | 1300 | 1065 | 1150 | |
| | Discharge length (cm/20 s) | 220 | 180 | 200 | |
| | Surface smoothness | ○ | ○ | ○ | |
| Compound 1-3 | Discharge quantity (g/20 s) | | | | |
| | Discharge length (cm/20 s) | | | | |
| | Surface smoothness | | | | |

(continued)

|  |  | Ex. 1 | Ex. 2 | Ex. 3 | Ex.4 |
|---|---|---|---|---|---|
|  |  | Acrylate-based acrylic rubber (A) | Acrylate-based acrylic rubber (B) | Acrylate-based acrylic rubber (C) | Acrylate-based acrylic rubber (D) |
| Compound 2-1 | Discharge quantity (g/ 20 s) |  |  |  | 1800 |
|  | Discharge length (cm/ 20 s) |  |  |  | 330 |
|  | Surface smoothness |  |  |  | ○ |
| Compound 2-2 | Discharge quantity (g/ 20 s) | 1950 |  |  |  |
|  | Discharge length (cm/ 20 s) | 340 |  |  |  |
|  | Surface smoothness | ○ |  |  |  |
| Compound 2-3 | Discharge quantity (g/ 20 s) |  |  |  |  |
|  | Discharge length (cm/ 20 s) |  |  |  |  |
|  | Surface smoothness |  |  |  |  |

[Table 5]

|  |  | Ex. 5 | Ex. 6 | Ex. 7 | Ex. 8 |
|---|---|---|---|---|---|
|  |  | Acrylate-based acrylic rubber (E) | Acrylate-based acrylic rubber (F) | Acrylate-based acrylic rubber (G) | Ethylene-acrylate-based acrylic rubber (A) |
| Viscoelasticity (polymer) | $\eta*(100°C)/\eta*(60°C)$ | 0.74 | 0.67 | 0.65 | 0.41 |
|  | $\eta*(100°C)$ (Pa.s) | 2430 | 2570 | 3450 | 3100 |
|  | LCB index | 7.9 | 6.1 | 7 | 13.4 |
| Compound 1-1 | Discharge quantity (g/ 20 s) | 1015 | 1100 |  | 1470 |
|  | Discharge length (cm/ 20 s) | 190 | 195 |  | 250 |
|  | Surface smoothness | ○ | ○ |  | ○ |

(continued)

| | | Ex. 5 | Ex. 6 | Ex. 7 | Ex. 8 |
|---|---|---|---|---|---|
| | | Acrylate-based acrylic rubber (E) | Acrylate-based acrylic rubber (F) | Acrylate-based acrylic rubber (G) | Ethylene-acrylate-based acrylic rubber (A) |
| Compound 1-2 | Discharge quantity (g/20 s) | | | | |
| | Discharge length (cm/20 s) | | | | |
| | Surface smoothness | | | | |
| Compound 1-3 | Discharge quantity (g/20 s) | | | 1040 | |
| | Discharge length (cm/20 s) | | | 175 | |
| | Surface smoothness | | | ○ | |
| Compound 2-1 | Discharge quantity (g/20 s) | | | | |
| | Discharge length (cm/20 s) | | | | |
| | Surface smoothness | | | | |
| Compound 2-2 | Discharge quantity (g/20 s) | | | | |
| | Discharge length (cm/20 s) | | | | |
| | Surface smoothness | | | | |
| Compound 2-3 | Discharge quantity (g/20 s) | | | 1600 | |
| | Discharge length (cm/20 s) | | | 300 | |
| | Surface smoothness | | | ○ | |

[Table 6]

| | | Comp. ex. 1 | Comp. ex. 2 | Comp. ex. 3 | Comp. ex. 4 | Comp. ex. 5 |
|---|---|---|---|---|---|---|
| | | Acrylate-based acrylic rubber (H) | Acrylate-based acrylic rubber (I) | Acrylate-based acrylic rubber (J) | Ethylene-acrylate-based acrylic rubber (B) | Acrylate-based acrylic rubber (K) |
| Viscoelasticity (polymer) | $\eta*(100°C)/\eta*(60°C)$ | 0.94 | 0.84 | 0.81 | 0.49 | 0.77 |
| | $\eta*(100°C)$ (Pa.s) | 2750 | 3785 | 3285 | 5260 | 3570 |
| | LCB index | 5 | 5.9 | 4.5 | 7.8 | 9.2 |
| Compound 1-1 | Discharge quantity (g/20 s) | 590 | | | 1050 | |
| | Discharge length (cm/20 s) | 100 | | | 140 | |
| | Surface smoothness | Δ | | | × | |
| Compound 1-2 | Discharge quantity (g/20 s) | | 835 | | | |
| | Discharge length (cm/20 s) | | 140 | | | |
| | Surface smoothness | | Δ | | | |
| Compound 1-3 | Discharge quantity (g/20 s) | | | 790 | | 985 |
| | Discharge length (cm/20 s) | | | 135 | | 165 |
| | Surface smoothness | | | × | | × |
| Compound 2-1 | Discharge quantity (g/20 s) | | | | 1470 | |
| | Discharge length (cm/20 s) | | | | 200 | |
| | Surface smoothness | | | | ○ | |

(continued)

|  | | Comp. ex. 1 | Comp. ex. 2 | Comp. ex. 3 | Comp. ex. 4 | Comp. ex. 5 |
|---|---|---|---|---|---|---|
|  | | Acrylate-based acrylic rubber (H) | Acrylate-based acrylic rubber (I) | Acrylate-based acrylic rubber (J) | Ethylene-acrylate-based acrylic rubber (B) | Acrylate-based acrylic rubber (K) |
| Compound 2-2 | Discharge quantity (g/ 20 s) | | 1250 | | | |
| | Discharge length (cm/ 20 s) | | 220 | | | |
| | Surface smoothness | | ○ | | | |
| Compound 2-3 | Discharge quantity (g/ 20 s) | | | | | |
| | Discharge length (cm/ 20 s) | | | | | |
| | Surface smoothness | | | | | |

As shown in Table 4 to Table 6, the acrylic rubbers according to the present embodiment satisfy the conditions of $\eta^*(100\ °C)/\eta^*(60\ °C)<0.8$, $\eta^*(100\ °C)<3500$ Pa•s, and LCBindex>6.0 in terms of the viscoelasticity of the polymers. Also, the crosslinked acrylic rubbers obtained from the acrylic rubbers according to the present embodiment exhibited discharge quantities exceeding 1,000 g/20 seconds, discharge lengths exceeding 150 cm/20 seconds, and satisfactory surface smoothness. In other words, by using an acrylic rubber that satisfies the conditions of $\eta^*(100\ °C)/\eta^*(60\ °C)<0.8$, $\eta^*(100\ °C)<3500$ Pa•s, and LCBindex>6.0, it is possible to improve the productivity of the crosslinked rubber (or rubber moldings) (Examples 1 to 8).

Also, the acrylic rubbers according to the present embodiment satisfy the condition of $\eta^*(100\ °C)<3500$ Pa•s and further satisfy the condition of LCBindex>6.0. In the case of using an acrylic rubber that satisfies these conditions, it is also possible to improve the productivity of rubber moldings.

Further, in any of the cases of acrylic rubber compositions under the conditions of Compound 1-1 to 1-3 and 2-1 to 2-3, the crosslinked acrylic rubber obtained from the acrylic rubber according to the present embodiment exhibited an increased discharge quantity, an increased discharge length, and satisfactory surface smoothness. From these results, in the case where the viscoelastic conditions described above are satisfied, even if the compound of an acrylic rubber composition is changed, the productivity of rubber molding can be improved.

As above, aspects of the present embodiment have been described with reference to examples. Note that the present embodiment is not limited to specific aspects or examples, and various modifications and changes can be made within the scope of the invention as described in the claims.

This international application claims priority under Japanese Patent Application No. 2017-16038 filed on January 31, 2017, the entire contents of which are hereby incorporated by reference.

**Claims**

1. An acrylic rubber comprising:

    a (meth)acrylate ester monomeric unit; and
    a crosslinkable monomeric unit,
    wherein a complex viscosity at 60 °C denoted as $\eta^*(60\ °C)$ and a complex viscosity at 100 °C denoted as $\eta^*(100$

°C) satisfy a following formula (1) and a following formula (2).

$$\eta*(100\ °C)/\eta*(60\ °C)<0.8\ \ (1)$$

$$\eta*(100\ °C)<3500Pa\cdot s\ \ \ \ (2)$$

2.  The acrylic rubber as claimed in claim 1,
    wherein a long-chain branching index LCBindex satisfies a following formula (3).

$$LCBindex>6.0\ \ \ \ \ \ (3)$$

3.  An acrylic rubber comprising:

    a (meth)acrylate ester monomeric unit;
    a polyfunctional monomeric unit; and
    a crosslinkable monomeric unit,
    wherein a complex viscosity at 100 °C denoted as $\eta*(100\ °C)$ satisfies a following formula (4) and a long-chain branching index LCBindex satisfies a following formula (5).

$$\eta*(100\ °C)<3500Pa\cdot s\ \ \ \ (4)$$

$$LCBindex>6.0\ \ \ \ \ \ (5)$$

4.  The acrylic rubber as claimed in any one of claims 1 to 3, wherein the crosslinkable monomeric unit is a monomeric unit that contains at least one of a carboxyl group, an epoxy group, and a halogen group.

5.  The acrylic rubber as claimed in any one of claims 1 to 4, wherein a weight-average molecular weight Mw is 240,000 to 820,000.

6.  An acrylic rubber composition containing the acrylic rubber as claimed in claim 5 and a crosslinking agent.

7.  A crosslinked acrylic rubber formed by crosslinking the acrylic rubber composition as claimed in claim 6.

## INTERNATIONAL SEARCH REPORT

| | International application No. |
|---|---|
| | PCT/JP2018/002564 |

### A. CLASSIFICATION OF SUBJECT MATTER
Int.Cl. C08F220/18(2006.01)i, C08L33/08(2006.01)i

According to International Patent Classification (IPC) or to both national classification and IPC

### B. FIELDS SEARCHED

Minimum documentation searched (classification system followed by classification symbols)
Int.Cl. C08F220/18, C08L33/08

Documentation searched other than minimum documentation to the extent that such documents are included in the fields searched
| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)
CAplus/REGISTRY(STN)

### C. DOCUMENTS CONSIDERED TO BE RELEVANT

| Category* | Citation of document, with indication, where appropriate, of the relevant passages | Relevant to claim No. |
|---|---|---|
| X<br>A | JP 55-5527 B2 (E. I. DU PONT DE NEMOURS AND COMPANY) 07 February 1980, column 2, line 29 to column 3, line 9, column 5, line 12 to column 6, line 14, column 7, line 37 to column 8, line 7, column 8, lines 36-44, tables 1, 2 & US 3904588 A column 1, lines 34-51, column 3, lines 5-49, examples 1-5, tables I, II | 1-2, 4-7<br>3 |
| X<br>A | JP 2011-515503 A (DAIKIN INDUSTRIES, LTD.) 19 May 2011, claims, paragraphs [0060], [0076]-[0077], fig. 1, 2 & US 2011/0021099 A1 claims, paragraphs [0141], [0155]-[0158], fig. 1, 2 & CN 101981070 A | 1, 4-7<br>2-3 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 06 April 2018 (06.04.2018) | 17 April 2018 (17.04.2018) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

## INTERNATIONAL SEARCH REPORT

International application No.

PCT/JP2018/002564

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2016-27155 A (NIPPON ZEON CO., LTD.) 18 February 2016, entire text & US 2017/0121439 A1 whole document & EP 3165544 A1 & CN 106471019 A & KR 10-2017-0028315 A | 1-7 |
| A | JP 2002-138116 A (NIPPON ZEON CO., LTD.) 14 May 2002, entire text (Family: none) | 1-7 |
| A | JP 2011-219614 A (TORAY FINE CHEMICALS CO., LTD.) 04 November 2011, entire text (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S59122508 B
- JP S6414260 B
- JP S555527 B
- JP 2017016038 A